Europäisches Patentamt

European Patent Office

Office européen des brevets

(19)

(11) Veröffentlichungsnummer : **0 096 085**
**B1**

(12) **EUROPÄISCHE PATENTSCHRIFT**

(45) Veröffentlichungstag der Patentschrift :
**10.09.86**

(21) Anmeldenummer : **82104903.8**

(22) Anmeldetag : **04.06.82**

(51) Int. Cl.⁴ : **B 41 J 3/16**, B 41 J 3/10,
G 01 D 15/24

(54) **Anordnung zum Andrücken eines mit einer Schreibelektrode versehenen Druckkopfes.**

(43) Veröffentlichungstag der Anmeldung :
**21.12.83 Patentblatt 83/51**

(45) Bekanntmachung des Hinweises auf die Patenterteilung : **10.09.86 Patentblatt 86/37**

(84) Benannte Vertragsstaaten :
**DE FR GB IT**

(56) Entgegenhaltungen :
DE-A- 2 717 077
DE-A- 2 900 637
US-A- 3 509 980

(73) Patentinhaber : **IBM DEUTSCHLAND GMBH**
**Pascalstrasse 100**
**D-7000 Stuttgart 80 (DE)**
**DE**
**International Business Machines Corporation**
**Old Orchard Road**
**Armonk, N.Y. 10504 (US)**
**FR GB IT**

(72) Erfinder : **Hilpert, Fritz**
**Lichtensteinstrasse 4**
**D-7030 Böblingen (DE)**
Erfinder : **Kohm, Erich**
**Krebenweg 15**
**D-7036 Schönaich (DE)**
Erfinder : **Rudolph, Volker, Dr.**
**Finkenweg 20**
**D-7031 Aidlingen 3 (DE)**
Erfinder : **Wohnsdorf, Manfred**
**Genkerstrasse 9**
**D-7030 Böblingen (DE)**

(74) Vertreter : **Blutke, Klaus, Dipl.-Ing.**
**Schönaicher Strasse 220**
**D-7030 Böblingen (DE)**

## Beschreibung

Anordnung für einen relativ zu einem über ein Widerlager geführten Aufzeichnungsträger bewegbaren und durch die Wirkung einer Betätigungsvorrichtung an den Aufzeichnungsträger andrückbaren und von diesem abhebbarem Schreibelektroden-Druckkopf, bestehend aus einem ersten Rahmenschenkel mit einer Schreibelektrodenhalterung und einem annähernd parallel zum ersten beabstandeten zweiten Rahmenschenkel, wobei der erste gegenüber dem zweiten fixierten Rahmenschenkel über eine den Druckkopf in Richtung auf den Aufzeichnungsträger vorspannende Federanordnung verschiebbar angeordnet ist, und aus einer an einem Rahmenschenkel angeordneten elektromagnetischen Betätigungsvorrichtung mit einem Elektromagneten für das Andrücken des Druckkopfes auf den Aufzeichnungsträger.

Druckköpfe dieser Art haben bei Registriergeräten oder bei mit elektrosensitivem Papier arbeitenden Druckern, wie z. B. Elektroerosionsdruckern meist eine größere Anzahl von in Reihen und/oder Spalten, oder auch in Form einer Punktmatrix angeordneten Schreibelektroden, bei deren selektiver Erregung auf dem Aufzeichnungsträger, beispielsweise durch Verdampfen oder durch Ausbrennen mit Lichtbogen, punktförmige Markierungen erzeugt werden können. Dabei ist es notwendig, den Druckkopf zum Drucken oder Schreiben gegen den auf einer Unterlage, wie z. B. einer Druckwalze aufliegenden Aufzeichnungsträger aufzudrücken. Es ist aber andererseits manchmal zweckmäßig, den Druckkopf nach dem Schreib-oder Druckvorgang von dem Aufzeichnungsträger abzuheben, um eine Beschädigung der Druck- oder Schreibelektroden oder des Aufzeichnungsträgers zu vermeiden. So ist z. B. aus der US-A-3 509 980 ein Thermo-Matrixdrucker bekannt, bei dem der Druckkopf auf einer Führungsschiene längs einer Druckzeile verfahrbar ist. Durch ein Verdrehen der Führungsschiene kann der Druckkopf an den wärmeempfindlichen Aufzeichnungsträger angedrückt oder beim Verdrehen in entgegengesetzter Richtung wieder abgehoben werden. D. h. der Druckkopf wird in jeder Druckposition angedrückt und wieder abgehoben. Der dazu erforderliche mechanische Aufwand ist sehr hoch und der Andruck ist unnachgiebig und starr.

Aus der DE-A-29 00 637 ist eine ähnliche Anordnung für einen mit elektrosensitivem Papier arbeitenden Drucker bekannt. Bei dieser Anordnung wird der verschwenkbare Druckkopf durch eine Druckfeder auf den Aufzeichnungsträger gedrückt. Dabei wird die druckfedergetriebene Bewegung des Schwenkarmes von einem Anschlag begrenzt. Dieser Anschlag ist Teil eines elektromagnetisch betätigbaren Schwenkarmes. Bei Deaktivierung des Elektromagneten wird dieser Anschlag durch eine Zugfeder in einer anderen Position gehalten, in der der Druckkopf vom Aufzeichnungsträger abgehoben ist. Bei dieser Anordnung erfolgt ein Ausgleich von Unebenheiten nur mittels einer einseitigen Vorspannung.

Das Abheben des Druckkopfes durch Federkraft und Andrücken mittels Elektromagnet erfordert aber einen genau justierten festen Anschlag für den Magnetanker, da sonst die Gefahr der Beschädigung des Druckkopfes und/oder des Aufzeichnungsträgers besteht, wenn der Druckkopf ungebremst auf den Aufzeichnungsträger aufschlägt.

Aufgabe der Erfindung ist es, eine Anordnung der eingangs genannten Art zu schaffen, welche es den Schreibelektroden gestattet, Unebenheiten des Aufzeichnungsträgers innerhalb eines relativ geringen Hubbereiches in der Aufwärts- und Abwärtsrichtung federnd mit möglichst gleichbleibendem Auflagedruck zu folgen und welche ein weiches Aufsetzen des Druckkopfes mit genau definiertem Druck auf den Aufzeichnungsträger sichergestellt. Für den Ruhestand des Druckers oder aber bei Ausfall des als Betätigungsvorrichtung wirkenden Elektromagneten soll jedoch der Druckkopf abgehoben sein.

Die der Erfindung zugrundeliegende Aufgabe wird durch die im kennzeichnenden Teil des Anspruches 1 angegebenen Maßnahmen gelöst.

Eine vorteilhafte Weiterbildung der Erfindung ist im Unteranspruch beschrieben.

Die Erfindung wird nunmehr anhand eines Ausführungsbeispieles in Verbindung mit den beigefügten Zeichnungen im einzelnen näher erläutert.

Dabei zeigt :

Figur 1 eine Anordnung zum Andrücken eines Druckkopfes gemäß dem Stande der Technik und

Figur 2 ebenfalls rein schematisch eine Anordnung zum Andrücke eines Druckkopfes gemäß der Erfindung.

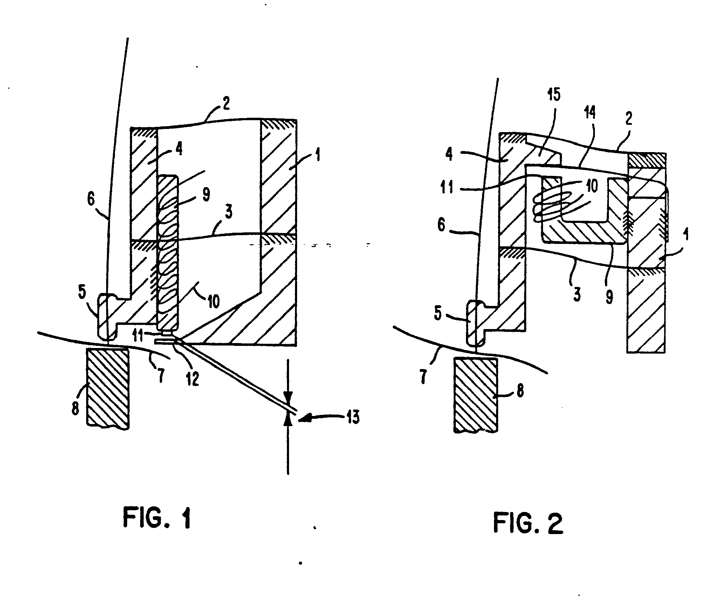

In Fig. 1 erkennt man, allerdings rein schematisch, in einer Art Schnittansicht die wesentlichsten Teile eines Druckkopfes, wie er beispielsweise in einem Elektroerosionsdrucker oder in einem Thermodrucker bzw. in einem mit elektrosensitivem Papier arbeitenden Drucker verwendet werden kann und z. B. längs einer Druckzeile verfahrbar ist. (Dieser Druckkopf ist ein Laborversuchsmuster der Anmelderin.) Man erkennt dabei einen Rahmenschenkel 1, an dem zwei in Richtung in der Zeichnung nach oben vorgespannte Federn 2 und 3 einer Federanordnung angedeutet sind. Dies können beispielsweise Blattfedern sein. An diesen Blattfedern 2 und 3 ist ein weiterer Rahmenschenkel 4 befestigt, der an seinem unteren Ende eine Halterung 5 für einen Druckdraht bzw. für eine Schreibelektrode 6 trägt, die an einen Aufzeichnungsträger 7 angedrückt werden soll, der wiederum auf einem Widerlager 8, beispielsweise einer Druckwalze, aufliegt. An dem Rahmenschenkel 4 ist ein Betätigungsglied, im vorliegenden Fall ein Elektromagnet 9 befestigt, der eine Erregerwicklung 10 aufweist und an seinem unteren Ende einen Polschuh 11 trägt, der gegenüber einem feststehenden Anker 12 liegt. Der feststehende Anker ist im vorliegenden Fall ein Teil des Rahmenschenkels 1.

Der Abstand zwischen Polschuh 11 und feststehendem Anker 12 ist als Ankerhub 13 angedeutet. Die hier gezeigte Anordnung besteht jedoch in Wirklichkeit aus zwei zueinander parallelen Rahmen, die durch zwei Blattfederanordnungen 2 und 3 miteinander verbunden sind. Obwohl nur ein Druckdraht oder nur eine Schreibelektrode gezeigt ist, kann selbstverständlich eine größere Anzahl von Schreibelektroden 6 in der Halterung 5 vorgesehen sein. Diese Schreibelektroden 6 sind über einen nicht dargestellten Mechanismus entsprechend ihrer Abnützung durch Abrieb oder Abbrand nachführbar.

Im Ruhezustand ist die Halterung 5 mit der Schreibelektrode 6 von dem Aufzeichnungsträger 7 abgehoben. Bei Erregung des Elektromagneten 9 durch die Wicklung 10 wird der Druckdraht oder die Schreibelektrode gegen den Aufzeichnungsträger 7 und das darunterliegende, vorzugsweise aus einem halbharten Material bestehende Widerlager angedrückt. Die Einstellung des Luftspaltes 13 ist nicht nur extrem kritisch, sondern kann auch sich verändernden Bedingungen nicht folgen und insbesondere kann dieser Abstand auch nicht an sich ändernde Bedingungen angepaßt werden. Mit anderen Worten, wenn zu Beginn eines Druckvorganges oder Schreibvorganges der durch den Druckkopf auf den Aufzeichnungsträger ausgeübte Druck für eine gute Schreibqualität ausreicht, dann verschlechtert sich die Schreibqualität fortlaufend durch den während des Druckvorganges erfolgenden Abbrand oder Abrieb der Schreibelektroden. Macht man jedoch den anfangs auf den Aufzeichnungsträger durch den Druckkopf ausgeübten Druck zu stark, dann ist eine Beschädigung des Aufzeichnungsträgers und/oder des Druckkopfes nicht auszuschließen.

Die Erfindung beschreitet nun einen völlig anderen Weg. In Fig. 2 sind gleiche Teile, auch wenn sie nicht in jedem Falle die gleiche Wirkung haben, doch mit gleichen Bezugszeichen versehen.

Man erkennt wiederum einen Rahmenschenkel 1 eines Druckkopfes, der wiederum an einem Wagen oder Schlitten längs einer Druckzeile verfahrbar ist. Der Rahmenschenkel 4 ist nunmehr über zwei in Richtung auf ein Andrücken des Druckkopfes vorgespannte Blattfedern 2 und 3 mit dem Rahmenschenkel 1 verbunden.

Der Rahmenschenkel 4 trägt an seinem unteren Ende ebenfalls die Halterung 5 für den Druckdraht oder die Schreibelektrode 6, die wiederum an einen Aufzeichnungsträger 7 angedrückt werden soll, der auf einem Widerlager 8, beispielsweise einer halbharten Druckwalze aufliegt. Das Betätigungsglied, nämlich der Elektromagnet 9, ist nunmehr an dem Rahmenschenkel 1 befestigt und ebenfalls mit einer Wicklung 10 versehen und weist an seinem oberen freien Ende einen Polschuh 11 auf.

Im Gegensatz zu der Ausführung gemäß Fig. 1 ist an dem Rahmenschenkel 1 nunmehr eine aus ferromagnetischem Material bestehende Blattfeder 14 befestigt, die für die Betätigungsvorrichtung, d. h. den Elektromagnet 9, den Anker bildet. Die Federvorspannung dieser Blattfeder 14 ist nach oben gerichtet und das äußere Ende dieser Blattfeder 14 liegt an einem aus nicht ferromagnetischem Material bestehenden Anschlag 15 an, der am oberen Ende des Rahmenschenkels 4 vorgesehen ist. Die in der Zeichnung nach oben gerichtete Federkraft der Blattfeder 14 ist größer als die nach unten gerichteten Federkräfte der Blattfedern 2 und 3. Dies hat zur Folge, daß im Ruhezustand die Halterung 5 mit dem Druckdraht oder der Schreibelektrode 6 von dem Aufzeichnungsträger 7 und dem Widerlager 8 abgehoben ist. Bei Erregung der Wicklung 10 wird die den Anker bildende Blattfeder 14 angezogen, so daß nunmehr die Blattfedern 2 und 3 zur Wirkung kommen können und damit federnd nachgiebig mit genau und fein dosierbarem Druck die Druckdrähte oder die Schreibelektroden an den Aufzeichnungsträger 7 andrücken. Dies hat den ganz wesentlichen Vorteil, daß man nunmehr immer mit einem genau definierten Druck arbeiten kann, den die Druckdrähte oder Schreibelektroden 6 auf den über ein Widerlager 8 geführten Aufzeichnungsträger 7 auszuüben vermögen. Damit erhält man auch einen gleichmäßigeren Andruck und eine wesentlich leichtere Regulierbarkeit für die Nachführung der Schreibelektroden zum Ausgleich des Abbrandes oder Abriebs. Selbstverständlich gilt auch hier das in Fig. 1 Gesagte, nämlich daß in der Halterung 5 nicht nur eine Schreibelektrode 6 sondern eine größere Anzahl von Schreibelektroden 6 untergebracht werden kann und daß die Rahmenschenkel 1 und 4 Teil eines rechteckigen Rahmens sind, die durch zwei Blattfederpaare 2 und 3 miteinander verbunden sind. Obwohl es im Prinzip denkbar ist, an jedem der beiden Rahmenschenkel 1 einen Elektromagneten 9 anzubringen, wird man im allgemeinen nur einen Elektromagneten vorsehen und wird den Anschlag 15 als Querschenkel ausführen, der die beiden Rahmenschenkel 4 und 4 miteinander verbindet. Es ist nunmehr auch klar erkennbar, daß der Anschlag 15 nicht aus ferromagnetischem Material bestehen darf. Andererseits kann man auch einen Anker 14 aus starrem Material verwenden, der an einer vorgespannten Feder angebracht ist. Dazu kann man noch eine Einstellvorrichtung vorsehen, mit der die nach oben gerichtete Kraft dieser Feder fein justierbar ist. Bei Ausfall des Elektromagneten 9 wird nunmehr mit Sicherheit verhindert, daß die Druckdrähte bzw. Schreibelektroden mit dem Aufzeichnungsträger unter Druck in Berührung kommen, so daß auch keine Beschädigung des Aufzeichnungsträgers oder der Schreibelektroden eintreten kann, wenn während des Betriebs die Betätigungsvorrichtung, d. h. der Elektromagnet 9 ausfallen sollte.

## Patentansprüche

1. Anordnung für einen relativ zu einem über ein Widerlager geführten Aufzeichnungsträger (7) bewegbaren und durch die Wirkung einer Betätigungsvorrichtung an den Aufzeichnungsträger andrückbaren und von diesem abhebbarem Schreibelektroden-Druckkopf, bestehend aus einem ersten Rahmenschenkel (4) mit einer Schreibelektrodenhalterung (5) und einem annähernd parallel zum ersten (4) beabstandeten zweiten (1) Rahmenschenkel, wobei der erste (4) gegenüber dem zweiten fixierten (1) Rahmenschenkel über eine den Druckkopf in Richtung auf den Aufzeichnungsträger vorspannende Federanordnung (2, 3) verschiebbar angeordnet ist, und aus einer an einem Rahmenschenkel angeordneten elektromagnetischen Betätigungsvorrichtung (9, 10) mit ¬inem Elektromagneten für das Andrücken des Druckkopfes auf den Aufzeichnungsträger (7), dadurch gekennzeichnet, daß die elektromagnetische Betätigungsvorrichtung (9, 10) am zweiten Rahmenschenkel (1) befestigt ist und einen um einen Schwenkpunkt am zweiten Rahmenschenkel (1) schwenkbaren federnden Anker (14) aufweist, dessen freies Ende an einem Anschlag (15) des federvorgespannten ersten Rahmenschenkels (4) anliegt und damit den Druckkopf entgegen der Wirkung der Federanordnung (2, 3) vom Aufzeichnungsträger (7) abhebt, und daß bei Erregung der elektromagnetischen Betätigungsvorrichtung der Anker (14) gegen seine Federvorspannung von dem Elektromagneten (9, 10) unter Freigabe des Anschlages (15) angezogen wird, wodurch die Schreibelektroden auf den Aufzeichnungsträger durch Wirkung des federvorgespannten (2, 3), ersten Rahmenschenkels (4) unter bestimmter Kraft ausgedrückt werden, um den Unebenheiten des Aufzeichnungsträgers in und in entgegengesetzter Richtung seiner Flächennormalen an der Schreibstelle zu folgen.

2. Anordnung nach Anspruch 1, dadurch gekennzeichnet, daß der Anker starr ausgeführt ist und durch eine an ihm und am zweiten Rahmenschenkel (1) befestigte Blattfeder seine Federvorspannung erhält.

## Claims

1. Arrangement for an electrode print head which can be moved relative to a record carrier (17) guided over a platen, and pressed onto the record carrier by the operation of an actuator, and lifted off said record carrier, consisting of a first frame piece (4), with a print electrode holder (5) and a second (1) frame piece spaced approximately in parallel to the first (4) one, the first (4) frame piece fixed relative to the second (1) one being shiftably arranged *via* a spring arrangement (2, 3) biasing the print head in the direction of the record carrier, and of an electromagnetic actuator (9, 10) arranged at a frame piece, with an electromagnet for pressing the print head onto the record carrier (7), characterized in that the electromagnetic actuator (9, 10) is fixed to the second frame piece (1) and comprises a resilient armature (14) pivotable round a pivoting point at the second frame piece (1), the free end of said armature resting against a stop (15) of the spring-biased first frame piece (4) and thus lifts the print head from the record carrier (7) against the effect of the spring arrangement (2, 3), and that upon the energization of the electromagnetic actuator the armature (14) is attracted against its spring bias by the electromagnet (9, 10), with the stop (15) being released, so that the print electrodes are pressed onto the record carrier under the influence of the spring biased (2, 3) first frame piece (4) under a predetermined force in order to follow the irregularities of the record carrier in and against the direction of its surface normal at the printing position.

2. Arrangement as claimed in claim 1, characterized in that the armature is of rigid design and receives its spring bias through a leaf spring affixed thereto and to the second frame piece (1).

## Revendications

1. Dispositif pour une tête d'impression munie d'une électrode d'écriture, pouvant être déplacée par rapport à un support d'enregistrement (7) guidé sur une butée et pouvant être appliqué sous pression contre le support d'enregistrement et en être écarté sous l'action d'un dispositif d'actionnement, constitué par une première branche (4) d'un cadre, comportant un support (5) d'électrodes d'écriture, et par une seconde branche (1) du cadre distante de la première branche (4) et approximativement parallèle à cette dernière, la première branche (4) étant disposée de manière à être déplaçable par rapport à la seconde branche fixe (1) du cadre, par l'intermédiaire d'un dispositif à ressorts (2, 3) exerçant une précontrainte sur la tête d'impression en direction du support d'enregistrement, et par un dispositif électromagnétique d'actionnement (9, 10) disposé sur une branche du cadre et comportant un électroaimant serv ¬t à appliquer sous pression la tête d'impression sur le support d'enregistrement (7), caractérisé en ce que le dispositif électromagnétique d'actionnement (9, 10) est fixé sur la seconde branche (1) du cadre et comporte une armature élastique (14) pouvant pivoter autour d'un centre de rotation sur la seconde branche (1) du cadre et dont l'extrémité libre est appliquée contre une butée (15) de la première branche (4) du cadre, soumise à la précontrainte élastique, et écarte de ce fait la tête d'impression du support d'enregistrement (7), à l'encontre de l'action du dispositif à ressorts (2, 3), et que, lors de l'excitation du dispositif électromagnétique d'actionnement, l'armature (14) est attirée à l'encontre de la précontrainte élastique qui lui est appliquée, par l'électroaimant (9, 10) induisant la libération de la butée (15), ce qui a pour effet que les électrodes d'écriture sont repoussées avec une force déterminée contre le support d'enregistrement, sous l'action de la première branche (4) du cadre, précontrainte élastiquement (2, 3), afin de suivre les inégalités du support d'enregistrement suivant la direction de la normale à la surface du support d'enregistrement au niveau du point d'écriture et dans la direction opposée.

2. Dispositif selon la revendication 1, caractérisé en ce que l'armature est rigide et est placée sous précontrainte élastique au moyen d'un ressort à lame fixé sur elle et sur la seconde branche (1) du cadre.

FIG. 1

FIG. 2